# EUROPÄISCHE PATENTSCHRIFT

(11) **EP 0 466 859 B1**
(45) Veröffentlichungstag und Bekanntmachung des Hinweises auf die Patenterteilung: **20.04.1994**
(21) Anmeldenummer: 91902660.9
(22) Anmeldetag: 26.01.1991
(51) Int. Cl.: E21B 43/08, E21B 17/18, E21B 43/14, E21B 47/04, E21B 47/06, F16L 39/00

(54) **VERROHRUNG ZUM AUSBAU EINER GRUNDWASSERMESSSTELLE**
PIPEWORK FOR CONSTRUCTING A GROUND WATER MEASURING POINT
TUYAUTERIE DE CUVELAGE DE SITES DE MESURE DE NAPPES D'EAU SOUTERRAINE

(30) Priorität: 07.02.1990 DE 4003584
(43) Veröffentlichungstag der Anmeldung: 22.01.1992
(73) Patentinhaber: PREUSSAG ANLAGENBAU GMBH, 30625 Hannover (DE)
(72) Erfinder: GREVE, Horst, D-3155 Edemissen (DE); GRIES, Konrad, D-3156 Hohenhameln (DE)
(86) Internationale Anmeldenummer: DE9100078
(87) Internationale Veröffentlichungsnummer: WO9112410

(56) Entgegenhaltungen:
- DE-A- 3 012 709
- DE-A- 3 423 917
- FR-A- 2 526 853
- US-A- 3 483 992
- US-A- 3 678 999
- US-A- 3 884 512
- US-A- 4 548 266
- US-A- 4 683 944

## Beschreibung

Die Erfindung betrifft eine Verrohrung zum Ausbau einer Grundwassermeßstelle mit mehreren in unterschiedlicher Tiefe in einer gemeinsamen Bohrung angeordneten Meßorten.

Grundwassermeßstellen, auch Pegelbrunnen oder Grundwasserbeobachtungsbrunnen genannt, dienen der Beobachtung der Grundwasserstände und der Grundwasserbeschaffenheit, vor allem im Einzugsgebiet von Wassergewinnungsanlagen. Zum Bau einer Grundwassermeßstelle, mit der mehrere wasserführende Schichten in unterschiedlichen Tiefen erfaßt werden, wird zunächst eine Bohrung niedergebracht. Anhand des ermittelten geologischen Profils der Bohrung werden die Horizonte für die einzelnen Meßorte bestimmt, die der Beobachtung unterliegen sollen. Anschließend wird für jeden Meßort ein aus einzelnen Rohren zusammengesetzter Rohrstrang eingebaut, der an seinem unteren Ende ein Filterrohr trägt. Nach dem Einbau der Rohrstränge wird das Bohrloch verfüllt, wobei unterschiedliche Materialien aufeinander geschichtet werden. Im Bereich der Meßorte wird das Bohrloch mit Filterkies verfüllt. Zwischen den Meßorten sind in der Regel Schichten aus Füllkies und Tonabdichtungen vorgesehen. Das Verfüllen solcher bekannter Mehrfachmeßstellen bereitet in der Praxis oft erhebliche Schwierigkeiten, da die Lage der einzelnen Rohrstränge innerhalb des Bohrlochs - vor allem bei größeren Bohrlochtiefen - von übertage nur unzureichend beeinflußbar ist. Ist die Lage der Rohrstränge ungünstig, so kann es zu einer ungenügenden Verfüllung des Bohrlochs und vor allem zu einer ungenügenden Abdichtung der die einzelnen Grundwasserstockwerke trennenden Schichten kommen. Die Folge sind Umläufigkeiten, die das Beobachtungsergebnis verfälschen.

Zur Vermeidung dieser Nachteile ist bereits eine Pegelrohranordnung bekannt (DE-PS 30 12 709), bei der mehrere nahe ihren oberen Enden miteinander verbundene, unterschiedlich lange Pegelrohre in ein alle Pegelrohre umgebendes, aus Stahl hergestelltes Tragrohr von einer dem längsten Pegelrohr annähernd gleicher Länge eingebaut sind, wobei das Tragrohr in Längsrichtung entsprechend der Lage der unteren Enden der Pegelrohre untereinander beabstandete Wassereintrittsöffnungen hat, an die das untere Ende des jeweils zugeordneten Pegelrohrs über einen Krümmer gegenüber dem Inneren des Tragrohrs abgedichtet angeschlossen ist. Diese Anordnung erleichtert zwar das Verfüllen des Bohrlochringraums und das Abdichten der Trennschichten zwischen den einzelnen Stockwerken. Der Bauaufwand für diese Pegelrohranordnung ist jedoch sehr groß und eignet sich daher nur für geringe Einbautiefen, wie sie für die Beobachtung oberflächennaher Sickerwasser ausreichen. Weiterhin weist die bekannte Rohranordnung nur kleine Wassereintrittsöffnungen auf, die keine ausreichenden Fördermengen zulassen, wie sie für die Entnahme von Grundwasserproben erforderlich sind.

Der Erfindung liegt die Aufgabe zugrunde, eine Verrohrung zu schaffen, die einen kostengünstigen Ausbau einer Grundwassermeßstelle der eingangs genannten Art ermöglicht und eine gute Verfüllung des Bohrlochs und eine zuverlässige Abdichtung der Trennschichten zwischen den einzelnen Meßorten gewährleistet.

Diese Aufgabe wird erfindungsgemäß dadurch gelöst, daß ein einziges aus einzelnen miteinander dicht verbundenen und in Längsrichtung durch Trennwände in mehrere Kanäle unterteilten Rohrlängen zusammengesetztes Mehrkanalrohr mit glatter, dicht verfüllbarer Außenwand vorgesehen ist, die zur Bildung eines Filters im Bereich des jeweiligen Kanals mit Filterschlitzen versehen ist.

Mit der Erfindung wird eine Ausbauverrohrung für eine Grundwassermeßstelle mit mehreren Meßorten geschaffen, die sich ebenso einfach einbauen, zuverlässig verfüllen und abdichten läßt wie ein einzelner Rohrstrang einer Einfachmeßstelle. Die erfindungsgemäße Verrohrung hat weiterhin den Vorteil, daß nur eine Bohrung mit einem verhältnismäßig kleinen Durchmesser ausgeführt werden muß, da ein Zwischenraum zum Verfüllen zwischen einzelnen Rohrsträngen entfällt.

Nach einem weiteren Vorschlag der Erfindung können die Rohrenden der mehrkanaligen Rohrlängen zylindrische Ringflansche, die durch eine Überwurfmutter miteinander verbindbar sind, und Orientierungsmittel aufweisen, die die koaxiale Ausrichtung der Kanäle gewährleisten. Die einzelnen Rohrlängen lassen sich bei einer solchen Ausgestaltung einfach miteinander verbinden, wobei der Außendurchmesser der Verbindungsstelle verhältnismäßig klein bleibt. Vorzugsweise ist auch die Mantelfläche der Rohrlängen zylindrisch ausgebildet. Hierdurch läßt sich eine optimale Abdichtung im Bohrloch erzielen und die Ausrüstung der Rohrenden mit Ringflanschen vereinfachen. Die Mantelfläche kann auch von der Zylinderform abweichen, wobei jedoch die Krümmungsradien einzelner Flächenabschnitte 1/10 des Umkreisdurchmessers nicht unterschreiten sollten, um die dichte Verfüllbarkeit nicht zu beeinträchtigen.

Zur gegenseitigen Abdichtung der Rohrenden an den Verbindungsstellen ist erfindungsgemäß vorzugsweise zwischen den Rohrenden ein scheibenförmiges Dichtelement angeordnet, das im Bereich der Kanalquerschnitte durchbrochen ist und das auf beiden Seiten Dichtungen trägt, die an den Stirnflächen der Rohrenden anliegen. Diese Ausgestaltung hat den Vorteil, daß die Rohrenden mit einer ebenen Stirnfläche versehen sein können, was für die Herstellung der einzelnen Rohrlängen außerordentlich günstig ist. In einer bevorzugten Ausgestaltung der Erfindung kann das Dichtelement im Bereich eines Kanalquerschnitts geschlossen sein. Mit einer solchen Ausbildung des Dichtelements ist es möglich, einen Kanalquerschnitt beispielsweise unmittelbar unterhalb einer Filterstrecke zu verschließen, um die Länge der Sumpfstrecke klein zu halten.

In einer bevorzugten Ausgestaltung der Erfindung werden die Rohrlängen des Mehrkanalrohrs im Extrudierverfahren aus Kunststoff hergestellt, wobei im Zentrum des Rohrquerschnitts durch die dort aufeinandertreffenden Trennwände ein im Querschnitt poligonaler Längskanal gebildet ist. Durch die Ausbildung eines solchen zentralen Längskanals läßt sich eine für den Herstellvorgang günstige Querschnittsform erzielen, die ohne spitzwinklige Ecken an den Verbindungsstellen der einzelnen Trennwände auskommt. Auch für die Ausbildung der auf den Stirnflächen der Rohrenden aufliegenden Dichtelemente ist die erfindungsgemäße Formgestalt der Rohrquerschnitts vorteilhaft. Der Längskanal kann auch zur Zentrierung und Ausrichtung der die Dichtelemente tragenden Scheibe dienen. Hierzu ist vorgesehen, daß das Dichtelement beidseitig Zapfen aufweist, die in den Längskanal eingreifen. Zusätzlich können erfindungsgemäß am Außenumfang des Dichtelements Orientierungsvorsprünge vorgesehen sein, die in passende Aussparungen in den Rohrenden eingreifen.

Die Erfindung wird nachfolgend anhand eines Ausführungsbeispiels näher erläutert, das in der Zeichnung dargestellt ist. Es zeigen
- Figur 1: Abschnitte eines erfindungsgemäßen Mehrkanalrohrs, in Längsrichtung geschnitten,
- Figur 2: eine Schnittdarstellung der Rohrenden zweier miteinander zu verschraubender Rohrlängen und des zwischen den Rohrenden einsetzbaren Dichtelements des Mehrkanalrohrs gemäß Figur 1,
- Figur 3: eine Schnittdarstellung der miteinander verschraubten Rohrenden gemäß Figur 2 und
- Figur 4: eine Stirnansicht des mit der Überwurfmutter versehenen Rohrendes gemäß Figur 3

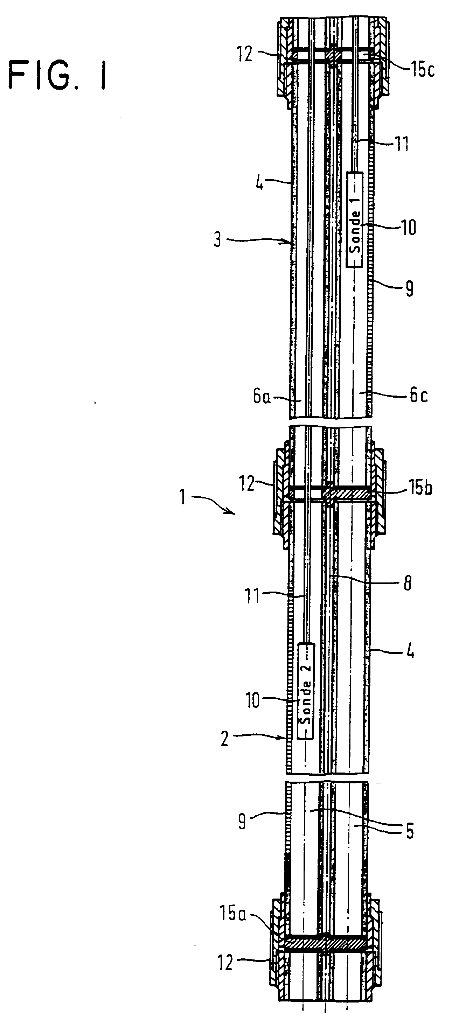

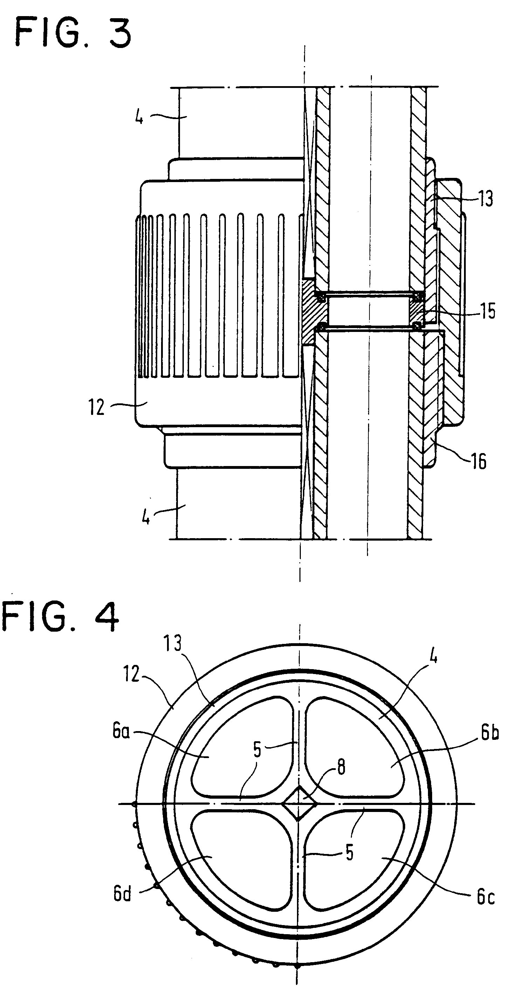

In Figur 1 ist von einem Mehrkanalrohr 1 ein unterer Endabschnitt 2 und ein Zwischenabschnitt 3 dargestellt. Beide Abschnitte 2, 3 sind aus Rohrlängen 4 gebildet, die aus einem zylindrischen Rohr bestehen, das durch radiale Trennwände 5 in vier in Längsrichtung verlaufende Kanäle 6a bis 6d unterteilt ist, von denen ein in einem ersten Quadranten des Rohrquerschnitts liegender Kanal 6a und ein in dem dritten Quadranten des Rohrquerschnitts liegender Kanal 6c in der Schnittdarstellung sichtbar sind. Im Zentrum der Rohrlängen 4 ist durch die Trennwände 5 weiterhin ein Blindkanal 8 gebildet, um eine Materialanhäufung durch das Zusammentreffen der Trennwände 5 zu vermeiden und die Herstellung der Rohrlängen aus einem thermoplastischen Kunststoff unter Anwendung eines Extrudierverfahrens zu erleichtern. Die Anordnung der einzelnen Kanäle 6a bis 6d und und des Blindkanals 8 ist aus Figur 4 ersichtlich.

Die Außenwand der Rohrlänge 4 des Endabschitts 2 ist im Bereich des Kanals 6a mit Filterschlitzen 9 versehen, durch die das Grundwasser in den Kanal 6a gelangen kann. Der Zwischenabschnitt 3 weist im Bereich des Kanals 6c ebenfalls Filterschlitze 9 auf, durch die das Grundwasser eines höheren Stockwerks in den Kanal 6c gelangt. Sonden 10 dienen zur Beobachtung des Grundwasserpegels und bestimmter Grundwassereigenschaften in den Kanälen 6a, 6c. Sie sind durch Leitungen 11 mit einer Meßstation übertage verbunden.

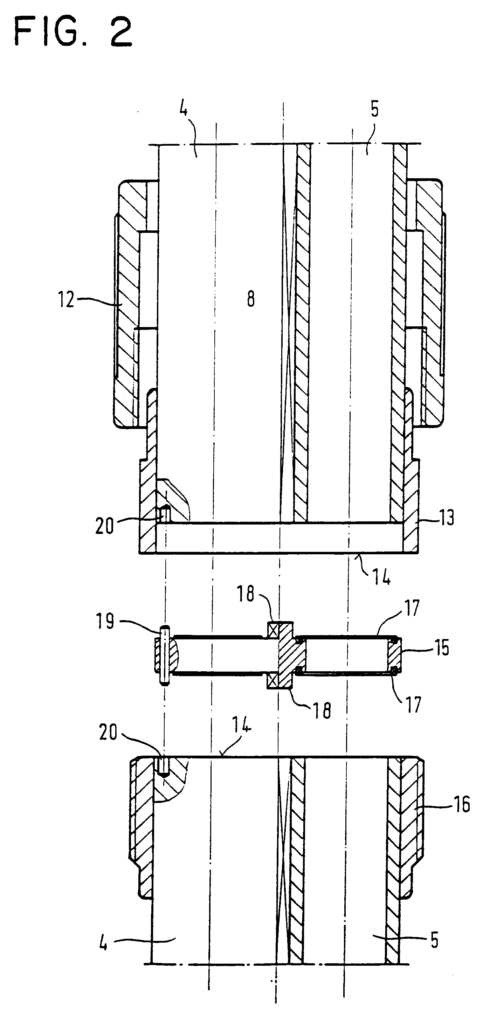

Die Verbindung zweier Rohrlängen 4 ist in den Figuren 2 und 3 vergrößert dargestellt. Ein Ende einer jeden Rohrlänge 4 ist mit einer Überwurfmutter 12 und mit einem Ringbund 13 versehen, an dem die Überwurfmutter 12 in axialer Richtung abstützbar ist. Der Ringbund 13 ist vorzugsweise durch Kleben mit der Rohrlänge 4 verbunden und ragt über die Stirnfläche 14 des Rohrlängenendes hinaus, um in seiner Bohrung ein Dichtelement 15 aufnehmen zu können. Das andere Ende der Rohrlängen 4 ist mit einem Gewindebund 16 versehen, auf den die Überwurfmutter 12 aufschraubbar ist. Der Gewindebund 16 ist ebenfalls durch Kleben am Rohrstrang 4 befestigt.

Das Dichtelement 15 ist in seiner Querschnittsform den Rohrlängen 4 angepaßt und beiderseits mit elastischen Dichtungen 17 versehen, die sich auf die Stirnflächen 14 der Rohrlängen 4 auflegen und die einzelnen Kanäle 6a, 6b, 6c, 6d getrennt voneinander abdichten. In seiner Mitte weist das Dichtelement 15 beidseitig einen Zapfen 18 auf, der jeweils in den Blindkanal 8 der Rohrlängen 4 eingreift. Ferner ist am Rand des Dichtelements 15 ein beidseitig hervorstehender Justierstift 19 vorgesehen, der jeweils in eine Bohrung 20 in den Stirnflächen 14 der mit dem Dichtelement verbundenen Rohrlängen 4 eingreift, um deren Kanäle genau zueinander auszurichten. Die Bohrungen 20 für den Justierstift 19 dienen ferner zur Kennzeichnung der einzelnen Kanäle beim Zusammenbau des Mehrkanalrohrs 1.

Je nach Verwendungszweck kann das Dichtelement 15 im Bereich aller Kanäle 6a bis 6d oder nur im Bereich einzelner Kanäle durchbrochen oder auch vollständig geschlossen sein. So ist es beispielsweise zweckmäßig am unteren Ende des Endabschnitts 2 in Figur 1 ein vollständig geschlossenes Dichtelement 15a vorzusehen, um das untere Ende des Mehrkanalrohrs 1 vollständig zu verschließen. Das Dichtelement 15b am unteren Ende des Zwischenabschnitts 3 muß im Bereich des Kanals 6a durchbrochen sein, damit die Filterstrecke dieses Kanals im Bereich des Endabschnitts u.a. für die Sonde 10 zugänglich bleibt. Im Bereich des Kanals 6c ist das Dichtelement 15b geschlossen, damit unterhalb der Filterschlitze 9 keine zu lange Sumpfstrecke entsteht. Im Bereich der nicht sichtbaren Kanäle 6b und 6d kann das Dichtelement 15b sowohl offen als auch geschlossen sein, wenn diese Kanäle in dieser Tiefe noch nicht genutzt werden. Das weiter oben befindliche Dichtelement 15c muß wenigstens im Bereich der Kanäle 6a und 6c durchbrochen sein. Für die gesamte Länge des Mehrkanalrohrs 1 sind also unterschiedliche Dichtelemente 15 erforderlich, wobei man im allgemeinen mit drei Ausführungen auskommt, nämlich einer allseits durchbrochenen, einer allseits geschlossenen und einer, die nur im Bereich eines Kanals geschlossen und in verschiedenen Lagen einbaubar ist, um jeden Kanal individuell nach unten absperren zu können.

Die beschriebene Verrohrung eignet sich für den Ausbau von Grundwassermeßstellen und Probebrunnen von geringer bis großer Tiefe. Der Ausbau ist einfach auszuführen und die Tiefen der verschiedenen Filterstrecken lassen sich von übertage genau festlegen. Die Rohrlängen können insbesondere aus Kunststoff kostengünstig hergestellt werden, wobei zur Bildung der Filterstrecken lediglich im Bereich eines Kanals einer oder mehrerer Rohrlängen Schlitze auszubilden sind. Wenn erforderlich, können die Filterstrecken in üblicher Weise durch Kiesmantelrohre ergänzt werden. Wenngleich die beschriebene Ausbildung der Verrohrung mit 4 Kanälen für eine Vielzahl von Anwendungsfällen vorteilhaft ist, so kann die Erfindung jedoch gleichermaßen auch mit einer kleineren oder größeren Zahl von Kanälen verwirklicht werden. Wesentlich ist dabei vor allem, daß die Öffnungsweite der einzelnen Kanäle ausreichend groß bemessen wird, um Pumpen oder Sonden üblicher Größe einführen zu können.

## Patentansprüche

1. Verrohrung zum Ausbau einer Grundwassermeßstelle mit mehreren in unterschiedlicher Tiefe in einer gemeinsamen Bohrung angeordneten Meßorten gekennzeichnet durch ein einziges aus einzelnen dicht miteinander verbundenen Rohrlängen (4) zusammengesetztes Mehrkanalrohr (1) mit glatter, dicht verfüllbarer Außenwand, bei dem die Rohrlängen (4) in Längsrichtung durch Trennwände (5) in mehrere Kanäle (6a - 6d) unterteilt und derart miteinander verbunden sind, daß ihre Kanäle (6a - 6d) an den Verbindungsstellen miteinander fluchten und nicht eingeschnürt sind, und bei dem zur Bildung von Filterstrecken für den Wassereintritt einzelne Rohrlängen vorgesehen sind, die in ihrer Außenwand im Bereich eines oder mehrerer Kanäle Filterschlitze (9) aufweisen.

2. Verrohrung nach Anspruch 1 dadurch gekennzeichnet, daß die Rohrenden der mehrkanaligen Rohrlängen (4) zylindrische Ringflansche (13, 16), die durch eine Überwurfmutter (12) miteinander verbindbar sind, und Orientierungsmittel (19, 20) aufweisen, die eine koaxiale Ausrichtung der Kanäle (6a bis 6d) gewährleisten.

3. Verrohrung nach einem der Ansprüche 1 oder 2, dadurch gekennzeichnet, daß zwischen den Rohrenden benachbarter Rohrlängen (4) ein Dichtelement (15) angeordnet ist, das im Bereich einzelner oder aller Kanäle (6a - 6d) durchbrochen ist und auf beiden Seiten Dichtungen (17) trägt, die an den Stirnflächen (14) der Rohrstränge (4) anliegen.

4. Verrohrung nach Anspruch 3, gekennzeichnet durch ein Dichtelement, das nur im Bereich eines Kanals geschlossen ist, wobei der geschlossene Bereich wahlweise in jeden Kanal einbaubar ist.

5. Verrohrung nach einem der vorhergehenden Ansprüche, dadurch gekennzeichnet, daß die Rohrlängen (4) im Extrudierverfahren aus einem thermoplastischen Kunststoff hergestellt sind, wobei im Zentrum des Rohrquerschnitts durch die dort aufeinandertreffenden Trennwände (5) ein Blindkanal (8) gebildet ist.

6. Verrohrung nach einem der vorhergehenden Ansprüche, dadurch gekennzeichnet, daß das Dichtelement (15) beidseitig einen Zapfen (18) aufweist, der in den Blindkanal (8) eingreift.

7. Verrohrung nach einem der vorhergehenden Ansprüche, dadurch gekennzeichnet, daß das Dichtelement Orientierungsvorsprünge (19) aufweist, die in passende Aussparungen (20) in den Rohrlängen (4) eingreifen.

## Claims

1. A piping for the completion of a groundwater monitoring site including several monitoring points disposed in a common borehole at different depths, characterized by a single multi-conduit pipe (1) having a smooth, tightly packable outer wall and being composed of individual pipe lengths (4) which are coupled to each other in a sealed relationship, in which said pipe lengths (4) are subdivided in the longitudinal direction into several conduits (6a - 6d) by partition walls (5) and are coupled to each other in such fashion that their conduits (6a - 6d) are in relative alignment at the junctures and not reduced in area, and in which for the purpose of providing filter sections for the admission of water individual pipe lengths are provided having in their outer wall filter slots (9) in the area of one or several conduits.

2. The piping as claimed in claim 1, characterized in that the pipe ends of the multi-conduit pipe lengths (4) include cylindrical annular flanges (13, 16) which are adapted to be connected together by a cap nut (12), as well as locating means (19, 20) ensuring coaxial alignment of the conduits (6a to 6d).

3. The piping as claimed in any one of the claims 1 or 2, characterized in that a sealing means (15) is arranged between the pipe ends of adjacent pipe lengths (4) which is apertured in the area of individual or all conduits (6a to 6d) and carries on both sides seals (17) resting against the end surfaces (14) of the pipe lengths (4).

4. The piping as claimed in claim 3, characterized by a sealing means which is closed only in the area of one conduit, with the closed area being adapted to be provided in a selected one of the conduits.

5. The piping as claimed in any one of the preceding claims, characterized in that the pipe lengths (4) are fabricated by an extrusion method out of a thermoplastic plastics, with a dummy conduit (8) being formed in the center of the pipe cross section by the partition walls (5) converging there.

6. The piping as claimed in any one of the preceding claims, characterized in that the sealing means (15) has on either side a pin (18) engaging in the dummy conduit (8).

7. The piping as claimed in any one of the preceding claims, characterized in that the sealing means includes locating projections (19) engaging in mating recesses (20) in the pipe lengths (4).

## Revendications

1. Tubage pour le cuvelage d'un lieu de mesure d'eaux souterraines comprenant plusieurs points de mesure disposés à des profondeurs différentes, dans un forage commun, caractérisé par un unique tube à canaux multiples (1) qui est composé de longueurs de tube individuelles (4) reliées entre elles de façon étanche, qui présente une paroi extérieure lisse apte à être remplie de façon étanche, pour lequel les longueurs de tube (4) sont divisées en plusieurs canaux (6a-6d) par des cloisons (5), dans le sens longitudinal, et sont reliées entre elles de telle sorte que leurs canaux (6a-6d) sont dans l'alignement les uns des autres au niveau des points de liaison et ne sont pas rétrécis, et pour lequel il est prévu, pour former des sections filtrantes pour l'entrée de l'eau, des longueurs de tube individuelles qui comportent, dans la paroi extérieure, dans la zone d'un ou plusieurs canaux, des fentes filtrantes (9).

2. Tubage selon la revendication 1, caractérisé en ce que les extrémités des longueurs de tube à canaux multiples (4) comportent des brides annulaires cylindriques (13, 16) qui sont aptes à être reliées entre elles par un écrou d'accouplement (12), et des moyens d'orientation (19, 20) qui garantissent un alignement coaxial des canaux (6a à 6d).

3. Tubage selon l'une des revendications 1 ou 2, caractérisé en ce qu'il est prévu, entre les extrémités de longueurs de tube (4) voisines, un élément d'étanchéité (15) qui est percé dans la zone de canaux individuels ou de tous les canaux (6a-6d) et qui porte, des deux côtés, des joints d'étanchéité (17) appliqués contre les surfaces frontales (14) des lignes de tube (4).

4. Tubage selon la revendication 3, caractérisé par un élément d'étanchéité qui n'est fermé que dans la zone d'un canal, la zone fermée pouvant être intégrée au choix dans chaque canal.

5. Tubage selon l'une des revendications précédentes, caractérisé en ce que les longueurs de tube (4) sont fabriquées par extrusion à partir d'une matière thermoplastique, un faux canal (8) étant défini, au centre de la section transversale du tube, par les cloisons (5) se rencontrant en ce point.

6. Tubage selon l'une des revendications précédentes, caractérisé en ce que l'élément d'étanchéité (15) comporte, des deux côtés, un tourillon (18) qui vient en prise dans le faux canal (8).

7. Tubage selon l'une des revendications précédentes, caractérisé en ce que l'élément d'étanchéité comporte des saillies d'orientation (19) qui viennent en prise dans des évidements correspondants (20) prévus dans les longueurs de tube (4).
